# EUROPÄISCHE PATENTSCHRIFT

(11) **EP 1 216 499 B1**
(45) Veröffentlichungstag und Bekanntmachung des Hinweises auf die Patenterteilung: **17.09.2008**
(21) Anmeldenummer: 00965821.2
(22) Anmeldetag: 06.09.2000
(51) Int. Cl.: H02P 6/20, H02H 7/08

(54) **ELEKTRONISCH KOMMUTIERBARER MOTOR**
ELECTRONICALLY COMMUTABLE MOTOR
MOTEUR A COMMUTATION ELECTRONIQUE

(30) Priorität: 15.09.1999 DE 19944198
(43) Veröffentlichungstag der Anmeldung: 26.06.2002
(73) Patentinhaber: ROBERT BOSCH GMBH, 70442 Stuttgart (DE)
(72) Erfinder: SUTTER, Joerg, 76571 Gaggenau (DE); SCHWENK, Wolfgang, 77704 Oberkirch-Tiergarten (DE); BERLING, Claude, F-67410 Drusenheim (FR)
(86) Internationale Anmeldenummer: PCT/DE2000/003057
(87) Internationale Veröffentlichungsnummer: WO 2001/020764

(56) Entgegenhaltungen:
- EP-A- 0 680 129
- US-A- 4 288 828
- US-A- 4 623 826
- US-A- 5 017 846
- US-A- 5 349 276
- US-A- 5 650 699
- US-A- 5 682 334

## Beschreibung

Die Erfindung betrifft einen elektronisch kommutierbaren Motor, dessen Erregerwicklungen über Halbleiter-Endstufen von einer elektronischen Steuereinheit mittels PWM-Steuersignalen ansteuerbar sind, wobei der Steuereinheit ein Sollwert vorgebbar ist und die Steuereinheit entsprechende PWM-Steuersignale an die Halbleiter-Endstufen abgibt und wobei eine Überwachungseinrichtung für die Drehzahl des Motors vorgesehen ist, mit der eine fehlerhafte Bewegung oder ein Stillstand des Motors erkennbar und der Motor abschaltbar ist.

Ein elektronisch kommutierbarer Motor dieser Art ist aus der US-A 5,349,276 bekannt. Bei diesem bekannten Motor wird die Geschwindigkeit ( = Drehzahl) in einem bestimmten Rahmen von minimaler bis maximaler Drehzahl vorgegeben und überwacht. Wird dieser Rahmen verlassen, dann wird der Motor abgeschaltet. Eine sofortige und schnelle Erkennung des richtigen Umlaufes und zwar in Abhängigkeit eines vorgegebenen Sollwertes der Drehzahl ist damit nicht möglich. Treten im Anlauf Schwierigkeiten - Schwergängigkeit oder Blockierung des Motors - auf, dann kann der Motor überlastet und beschädigt werden, bevor er in den überwachten Drehzahlbereich gelangt.

Derartige Motoren werden für verschiedene Anwendungsfälle eingesetzt. Je nach Bauart weisen dies Motoren mehrere Raststellungen auf, die für den Anlauf des Motors häufig Schwierigkeiten mit sich bringen und dazu führen können, dass der Motor selbst bei Vorgabe eines Sollwertes nicht anläuft. Zudem können mechanische Fehler vorliegen, die zu einer Blockierung des Motors im Stillstand führen, was beim Anlegen eines Sollwertes an die Steuereinheit zu Überlastungen führen kann.

Die US 5,682,334 befasst sich mit einer Anlauf-Überwachung des Motors, die jedoch nicht mit vorgegebenen Festwerten arbeitet, sondern eine vorgegebene Beschleunigungscharakteristik abgespeichert hat, welche durch Geschwindigkeits- und Zeitpunkte definiert ist. Die Überwachung erfolgt in der Weise, dass eine erreichte Motorgeschwindigkeit = Drehzahl und die seit Beginn des Anlaufes verstrichene Zeit mit der in der gespeicherten Charakteristik für diese Geschwindigkeit zugeordneten Zeit verglichen wird. Dabei werden stets dieselben Anlaufbedingungen und eine definierte vorgegebene Anlaufcharakteristik vorausgesetzt. nun ist es aber in vielen Fällen so, dass der Motor mit unterschiedlichen Anlaufbedingungen für unterschiedliche Betriebszustände in Betrieb gesetzt wird. Dies ist mit der bekannten Anlaufüberwachung nicht auf einfache Art möglich.

Es ist Aufgabe der Erfindung, einen elektronisch kommutierbaren Motor der eingangs erwähnten Art zu schaffen, bei dem schon zu Beginn des Anlaufes eine Überwachung vorgenommen wird, um eine Überlastung und Beschädigung durch Überlastung zu vermeiden.

Diese Aufgabe wird bei einem gattungsgemäßen Motor nach der Erfindung dadurch gelöst, dass mit der Inbetriebnahme des Motors durch Vorgabe eines Sollwertes und/oder der Einschaltung der Steuereinheit und/oder der Halbleiter-Endstufen der Überwachungseinrichtung eine Anlaufzeit vorgebbar ist, die von der Größe des vorgegebenen Sollwertes abhängig ist und mit zunehmender Größe desselben vorzugsweise zunimmt, und dass nach Ablauf der vorgegebenen Anlaufzeit die Überwachungseinrichtung die erreichte Drehzahl des Motors mit einer Mindestdrehzahl vergleicht und bei Nichterreichen derselben die Steuereinheit und/oder die Halbleiter-Endstufen abschaltet.

Entscheidend ist eine Anlaufzeit Tx, die von dem für den Anlauf vorgegebenen Sollwert Nₛₒₗₗ abhängt und damit die unterschiedlichen Anlaufkennlinien berücksichtigt. Es wird nach dieser Zeit nur noch festgestellt, ob die dann erreichte Drehzahl N des Motors eine vorgegebene Mindestdrehzahl Nₘᵢₙ erreicht hat. Durch entsprechende Wahl der vorgegebenen Anlaufzeiten Tx kann stets mit derselben Mindestdrehzahl Nₘᵢₙ verglichen werden. Der dazu erforderliche Überwachungsaufwand ist minimal.

Die Ein- und Abschaltung der Steuereinheit und/oder der Halbleiter-Endstufen kann nach einer Ausführung einfach durch Ein -und Abschaltung der Versorgungsspannung erfolgen.

Die Abschaltung der Steuereinheit und/oder der Halbleiter-Endstufen und damit des Motors kann zudem zeitverzögert ausgeführt werden.

Der fehlende und/oder fehlerhafte Anlauf ist nach einer weiteren Ausgestaltung optisch und/oder akustisch anzeigbar.

Ist vorgesehen, dass die Überwachungseinheit und/oder die Anzeigeeinrichtung in die Steuereinheit integriert ist, dann ändert sich der konstruktive Aufbau des Motors nicht, da die elektronische Steuereinheit auch die Funktionen der Überwachungseinrichtung mit übernimmt.

Die Erfindung wird anhand eines als Blockschaltbild schematisch dargestellten Ausführungsbeispiels näher erläutert.

Die Motoreinheit umfasst die Funktionseinheiten Steuereinheit STE, Halbleiter-Endstufen EST und den eigentlichen Motor M mit den Erregerwicklungen des Stators und dem Dauermagnet-Rotor, der als Außen- oder Innenläufer ausgebildet sein kann.

Soll der Motor M in Betrieb genommen werden, dann wird der Steuereineinheit STE ein Sollwert Nₛₒₗₗ vorgegeben, der zu einer Drehzahl N des Motors M führen soll. Die Vorgabe kann z. B. manuell über ein Potentiometer vorgegeben werden. In der Steuereinheit STE ist eine Funktion vorgegeben, die die Abängigkeit der PWM-Steuersignale PWM_{end} für die Halbleiter-Endstufen EST von dem DrehzahlSollwert Nₛₒₗₗ enthält.

Mit der Einschaltung der Steuereinheit STE und/oder der Halbleiter-Endstufen EST wird ein Startsignal Te an eine Überwachungseinrichtung ÜE abgegeben, die die Drehzahl N des Motors M in an sich bekannter Weise erfaßt.

Nach einer vorgegebenen Anlaufzeit Tx überprüft die Überwachungseinrichtung ÜE in Verbindung mit der Steuereinheit STE, ob eine vorgegebene Mindestdrehzahl Nₘᵢₙ erreicht ist. Ist dies der Fall, dann wird der Anlauf des Motors M fortgesetzt und bis zum Dauerlauf mit der vorgegebenen Solldrehzahl fortgeführt.

Stellt die Überwachungseinrichtung ÜE und/oder die Steuereinheit STE jedoch fest, dass der Motor M überhaupt nicht angelaufen oder die entsprechende Mindestdrehzahl Nₘᵢₙ in der vorgegebenen Anlaufzeit Tx nicht erreicht hat, dann werden zum Schutz gegen Überlastungen die Steuereinheit STE und/oder die Halbleiter-Endstufen EST abgeschaltet, wie die Kontakte ab zur Abschaltung der Versorgungsspannung U_{batt} zeigen.

Die Steuereinheit STE kann in Abhängigkeit von dem Sollwert Nₛₒₗₗ die Pulsweite und/oder die Kommutierungsfrequenz der PWM-Steuersignale PWM_{end} verändern.

Die Anlaufzeit Tx kann mit zunehmendem Sollwert Nₛₒₗₗ ebenfalls zunehmen. In jedem Fall ist sie jedoch kurz genug, um eine Überlastung des Motors und dessen elektronische Bauteilen zu verhindern. Dies gilt selbstverständlich auch dann noch, wenn die Abschaltung der Steuereinheit STE und/oder der Halbleiter-Endstufen zeitverzögert ausgeführt wird.

Der fehlende und/oder fehlerhafte Anlauf des Motors kann optisch und/oder akustisch oder über die Sollwertleitung elektrisch angezeigt werden.

Die Überwachungseinrichtung ÜE und/oder Anzeigeeinrichtung werden mit ihren Funktionen vorzugsweise in die Steuereinheit STE integriert.

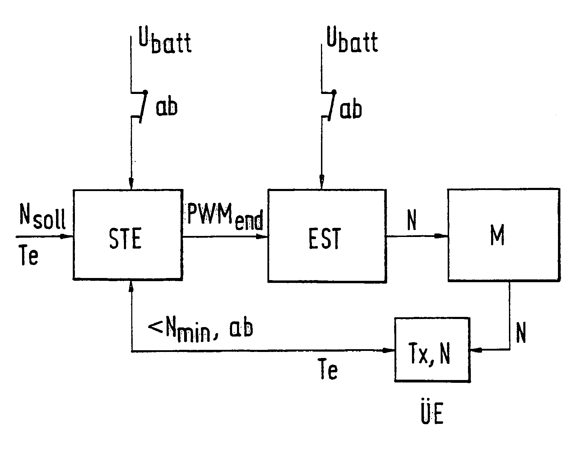

## Patentansprüche

1. Elektronisch kommutierbarer Motor, dessen Erregerwicklungen über Halbleiter-Endstufen (EST) von einer elektronischen Steuereinheit (STE) mittels PWM-Steuersignalen ansteuerbar sind, wobei der Steuereinheit (STE) ein Sollwert (Nₛₒₗₗ) vorgebbar ist und die Steuereinheit (STE) entsprechende PWM-Steuersignale an die Halbleiter-Endstufen (EST) abgibt und wobei eine Überwachungseinrichtung (ÜE) für die Drehzahl (N) des Motors (M) vorgesehen ist, mit der eine fehlerhafte Bewegung oder ein Stillstand des Motors (M) erkennbar und der Motor (M) abschaltbar (ab) ist,
**dadurch gekennzeichnet,**
**dass** mit der Inbetriebnahme des Motors durch Vorgabe eines Sollwertes (Nₛₒₗₗ) und/oder der Einschaltung (Te) der Steuereinheit (STE) und/oder der Halbleiter-Endstufen (EST) der Überwachungseinrichtung (ÜE) eine Anlaufzeit (Tx) vorgebbar ist, die von der Größe des vorgegebenen Sollwertes (Nₛₒₗₗ) abhängig ist und mit zunehmender Größe desselben vorzugsweise zunimmt, und dass nach Ablauf der vorgegebenen Anlaufzeit (Tx) die Überwachungseinrichtung (ÜE) die erreichte Drehzahl (N) des Motors mit einer Mindestdrehzahl (Nₘᵢₙ) vergleicht und bei Nichterreichen derselben die Steuereinheit (STE) und/oder die Halbleiter-Endstufen abschaltet (ab).

2. Elektronisch kommutierbarer Motor nach Anspruch 1,
**dadurch gekennzeichnet,**
**dass** die Steuereinheit (STE) ein in der Pulsweite oder Kommutierungsfrequenz auf den vorgegebenen Sollwert entsprechend abgestimmtes PWM-Steuersignal (PWMₛₒₗₗ) an die Halbleiter-Endstufen (EST) abgibt.

3. Elektronisch kommutierbarer Motor nach Anspruch 1 oder 2,
**dadurch gekennzeichnet,**
**dass** die Einschaltung (TE) und die Abschaltung (ab) des Motors (M) durch Ein- und Ausschaltung der Versorgungsspannung (U_{batt}) erfolgt.

4. Elektronisch kommutierbarer Motor nach einem der Ansprüche 1 bis 3,
**dadurch gekennzeichnet,**
**dass** die Abschaltung (ab) der Steuereinheit (STE) und/oder der Halbleiter-Endstufen (EST) zeitverzögert erfolgt.

5. Elektronisch kommutierbarer Motor nach einem der Ansprüche 1 bis 4,
**dadurch gekennzeichnet,**
**dass** der fehlende oder fehlerhafte Anlauf des Motors optisch und/oder akustisch anzeigbar ist.

6. Elektronisch kommutierbarer Motor nach einem der Ansprüche 1 bis 5,
**dadurch gekennzeichnet,**
**dass** die Überwachungseinheit (ÜE) und/oder die Anzeigeeinrichtung in die Steuereinheit (STE) integriert ist.

## Claims

1. Motor which can be commutated electronically and whose field windings can be driven by means of PWM control signals via semiconductor output stages (EST) from an electronic control unit (STE), in which case a nominal value (Nₙₒₘ) can be predetermined for the control unit (STE) and the control unit (STE) emits appropriate PWM control signals to the semiconductor output stages (EST), and in which case a monitoring device (ÜE) is provided for the rotation speed (N) of the motor (M) by means of which it is possible to identify that the motor (M) has moved incorrectly or has stopped, and the motor (M) can be switched off (ab),
**characterized**
**in that** a starting time (Tx) can be predetermined on starting up the motor, by presetting a nominal value (Nₙₒₘ) and/or by switching on (Te) the control unit (STE) and/or the semiconductor output stages (EST) of the monitoring device (ÜE), which starting time (Tx) is dependent on the magnitude of the predetermined nominal value (Nₙₒₘ) and preferably increases as its magnitude increases, and in that, once the predetermined starting time (Tx) has elapsed, the monitoring device (ÜE) compares the rotation speed (N) reached by the motor with a minimum rotation speed (Nₘᵢₙ) and, if the latter has not been reached, switches off (ab) the control unit (STE) and/or the semiconductor output stages.

2. Motor which can be commutated electronically according to Claim 1,
**characterized**
**in that** the control unit (STE) emits to the semiconductor output stages (EST) a PWM control signal (PWMₙₒₘ) whose pulse width or commutation frequency is matched appropriately to the predetermined nominal value.

3. Motor which can be commutated electronically according to Claim 1 or 2,
**characterized**
**in that** the motor (M) is switched on (TE) and switched off (ab) by switching the supply voltage (U_{batt}) on and off.

4. Motor which can be commutated electronically according to one of Claims 1 to 3,
**characterized**
**in that** the control unit (STE) and/or the semiconductor output stages (EST) are/is switched off (ab) with a time delay.

5. Motor which can be commutated electronically according to one of Claims 1 to 4,
**characterized**
**in that** failing of the motor to start, or incorrect starting of the motor, can be indicated visually and/or audibly.

6. Motor which can be commutated electronically according to one of Claims 1 to 5,
**characterized**
**in that** the monitoring unit (ÜE) and/or the indication device are/is integrated in the control unit (STE).

## Revendications

1. Moteur à commutation électronique dont les enroulements d'excitation sont commandés par l'intermédiaire d'étages de puissance à semi-conducteur (EST) par une unité de commande électronique (STE) à l'aide de signaux de commande PWM,
l'unité de commande (STE) prédéfinissant une valeur de consigne (Nₛₒₗₗ) et l'unité de commande (STE) émettant des signaux de commande PWM correspondants vers les étages de puissance à semi-conducteur (EST), et
une installation de surveillance (ÜE) est prévue pour la vitesse de rotation (N) du moteur (M), qui permet de détecter un mouvement défectueux et/ou un arrêt du moteur (M) et de commuter (ab) le moteur (M),
**caractérisé en ce qu'**
avec la mise en marche du moteur par la prédéfinition d'une valeur de consigne (Nₛₒₗₗ) et/ou par le branchement (Te) de l'unité de commande (STE) et/ou des étages de puissance à semi-conducteur (EST) de l'installation de surveillance (ÜE), on prédéfinit une durée de démarrage (Tx) dépendant de l'amplitude de la valeur de consigne prédéfinie (Nₛₒₗₗ) et elle augmente de préférence avec l'augmentation de cette grandeur et **en ce que**,
à la fin du temps de démarrage (Tx) prédéfini, l'installation de surveillance (ÜE) compare la vitesse de rotation obtenue (N) du moteur à une vitesse de rotation minimale (Nₘᵢₙ) et si celle-ci n'est pas atteinte, l'unité de commande (STE) et/ou les étages de puissance à semi-conducteur sont coupés (ab).

2. Moteur à commutation électronique selon la revendication 1,
**caractérisé en ce que**
l'unité de commande (STE) émet un signal de commande PWM (PWMₛₒₗₗ) de largeur d'impulsion ou de fréquence de commutation déterminée en fonction d'une valeur de consigne prédéfinie vers les étages de puissance à semi-conducteur (EST).

3. Moteur à commutation électronique selon la revendication 1 ou 2,
**caractérisé en ce que**
le branchement (TE) et la coupure (ab) du moteur (M) se font par le branchement ou la coupure de la tension d'alimentation (U_{batt}).

4. Moteur à commutation électronique selon les revendications 1 à 3,
**caractérisé en ce que**
la coupure (ab) de l'unité de commande (STE) et/ou des étages de puissance à semi-conducteur (EST) est retardée dans le temps.

5. Moteur à commutation électronique selon les revendications 1 à 4,
**caractérisé en ce que**
le défaut de démarrage ou le démarrage défectueux du moteur est indiqué de manière optique et/ou acoustique.

6. Moteur à commutation électronique selon les revendications 1 à 5,
**caractérisé en ce que**
l'unité de surveillance (ÜE) et/ou l'installation d'affichage sont intégrées dans l'unité de commande (STE).
